# EUROPEAN PATENT APPLICATION

(11) **EP 4 046 494 A1**
(43) Date of publication of application: **24.08.2022**
(21) Application number: 22154746.6
(22) Date of filing: 02.02.2022
(51) Int. Cl.: A21B 7/00

(54) **BREAD MAKER**

(30) Priority: 19.02.2021 JP 2021024910
(71) Applicant: Panasonic Intellectual Property Management Co., Ltd., Osaka-shi, Osaka 540-6207 (JP)
(72) Inventor: Otsuki, Kazuya, Osaka-shi, Osaka, 540-6207 (JP); Nakayama, Atsuo, Osaka-shi, Osaka, 540-6207 (JP)
(74) Representative: Grünecker Patent- und Rechtsanwälte PartG mbB

(57) **Abstract**

A bread maker includes a main body, a lid, a kneading container, a kneading paddle, a motor, and a hinge. The lid is attached to the main body to openably cover a main body opening, and is retainable in an open state and a closed state. The kneading container is disposed in a heating chamber to knead and heat ingredients. The kneading paddle kneads the ingredients in the kneading container. The motor drives the kneading paddle. The hinge pivotally supports the lid onto the main body. A hinge side and a side opposite to the hinge side of the bread maker are defined as a back side and a front side of the bread maker, respectively. The motor is disposed in a front half area inside the main body, and the hinge is disposed on a top rear part of the main body. In a side view of the main body, a gravity center of the bread maker with the lid in the open state is located in front of a center of a depth of the bread maker including the lid in the open state.

## Description

### BACKGROUND

### 1. Technical Field

The present disclosure relates to a bread maker.

### 2. Description of the Related Art

Patent Unexamined Publication No. 2012-65969 discloses a transversely-installed (horizontal) bread maker. The bread maker disclosed in the above patent literature includes a baking chamber, a container housed in a baking chamber, a kneading blade configured to knead bread dough in the container, and two motors (kneading motor and grinding motor).

### SUMMARY

A conventional bread maker described above has room for improvement with respect to suppression of an overturning tendency. It is therefore an object of the present disclosure to provide a bread maker that can suppress the overturning tendency by placing a motor away from the center of rotation at overturning.

A bread maker of the present disclosure includes a main body, a lid, a kneading container, a kneading paddle, a motor, and a hinge.

The main body includes a heating chamber provided inside the main body and a main body opening communicated with the heating chamber. The lid is attached to the main body to openably cover the main body opening. The lid can be held in an open and closed states.

The kneading container is disposed in the heating chamber to knead and heat ingredients. The kneading paddle kneads the ingredients in the kneading container. The motor drives the kneading paddle. The hinge pivotally supports the lid onto the main body.

In the above bread maker, a hinge side of the bread maker and a side opposite to the hinge side are called a back side and a front side of the bread maker, respectively. The motor is disposed in a front half area of the main body, and the hinge is disposed on a top rear part of the main body. In a side view of the main body, a gravity center of the bread maker with the lid in the open state is located in front of a center of a depth of the bread maker including the lid in the open state.

The bread maker of the present disclosure can reduce a tendency of the bread maker to overturn.

### BRIEF DESCRIPTION OF DRAWINGS

FIG. 1 is a perspective view of a bread maker in accordance with a first exemplary embodiment of the present disclosure.
FIG. 2 is a perspective view of the bread maker in a state an outer lid is open in accordance with the first exemplary embodiment.
FIG. 3 is a plan view of the bread maker in accordance with the first exemplary embodiment.
FIG. 4 is a front view of the bread maker in accordance with the first exemplary embodiment.
FIG. 5 is a longitudinal sectional view taken along line 5-5 in FIG. 3.
FIG. 6 is a longitudinal sectional view taken along line 6-6 in FIG. 3.
FIG. 7 is a transverse sectional view taken along line 7-7 in FIG. 4.
FIG. 8 is a table listing names and weights of major components of the bread maker in accordance with the first exemplary embodiment.
FIG. 9 is an exploded perspective view of the bread maker in accordance with the first exemplary embodiment.
FIG. 10 is a diagram illustrating an XY coordinate system in the transverse sectional view in FIG. 7.
FIG. 11 is a side view of the bread maker when the lid is closed in accordance with the first exemplary embodiment.
FIG. 12 is a front view of the bread maker when the lid is closed in accordance with the first exemplary embodiment.
FIG. 13 is a side view of the bread maker when the lid is open in accordance with the first exemplary embodiment.
FIG. 14 is a front view of the bread maker when the lid is open in accordance with the first exemplary embodiment.
FIG. 15 is a perspective view of a bread maker in accordance with a second exemplary embodiment of the present disclosure.
FIG. 16 is a side view of the bread maker when the lid is closed in accordance with the second exemplary embodiment.
FIG. 17 is a side view of the bread maker when the lid is open in accordance with the second exemplary embodiment.

### DETAILED DESCRIPTION OF PREFERRED EMBODIMENT

### (Knowledge behind the present disclosure)

Vertical and horizontal bread makers were conventionally known at the time the inventors reached the present disclosure. Some models of conventional bread makers are equipped with a motor for kneading bread dough. Some conventional bread makers are also provided with an inlet for automatically adding a sub-ingredient to the bread dough.

However, stability or a gravity center position of the bread maker has not been sufficiently considered. On the other hand, the number of accessories provided in the bread maker has been increasing. The gravity center position changes as the number of accessories increases. Accordingly, stability now needs to be taken into consideration in designing the bread maker.

Since a main body of a horizontal bread maker has a shorter depth than a vertical bread maker, the gravity center of the horizontal bread maker may be located in a back half area of the main body when a lid is open. Under the circumstances, the inventors have reached the subject matter of the present disclosure.

Exemplary embodiments of the present disclosure will be described below with reference to the drawings. In the present disclosure, description of known issues is omitted. In addition, same or substantially same components are given the same reference marks to omit duplicate description.

### (First exemplary embodiment)

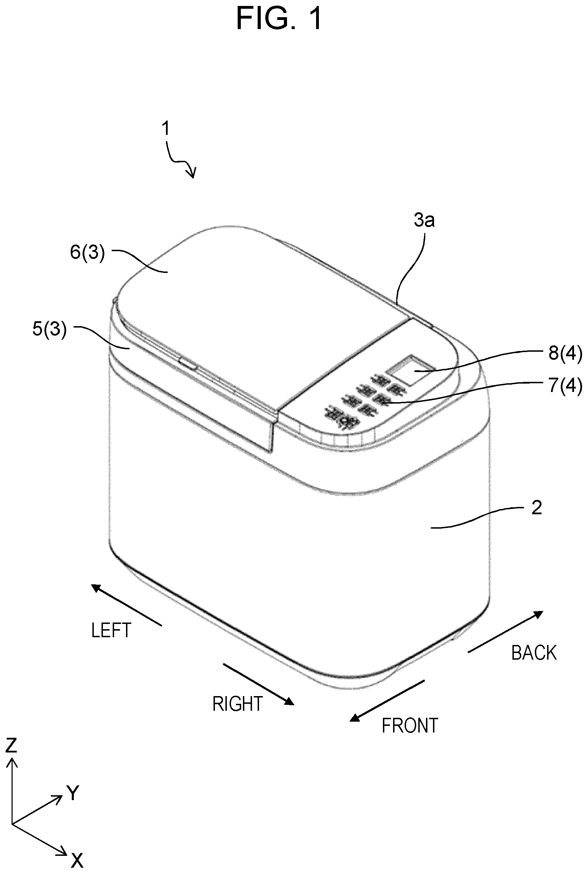

Bread maker 1 in a first exemplary embodiment of the present disclosure will be described with reference to FIG. 1 to FIG. 14.

### [Overall structure]

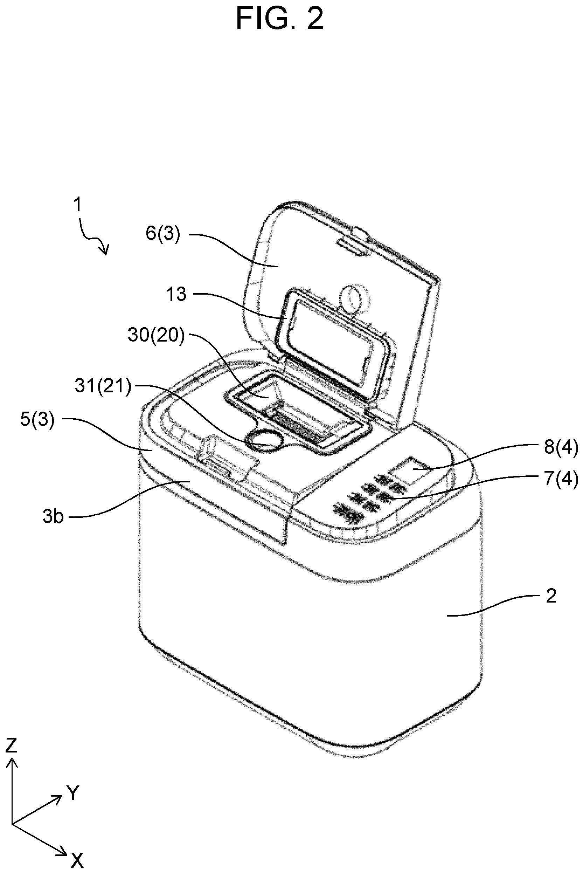

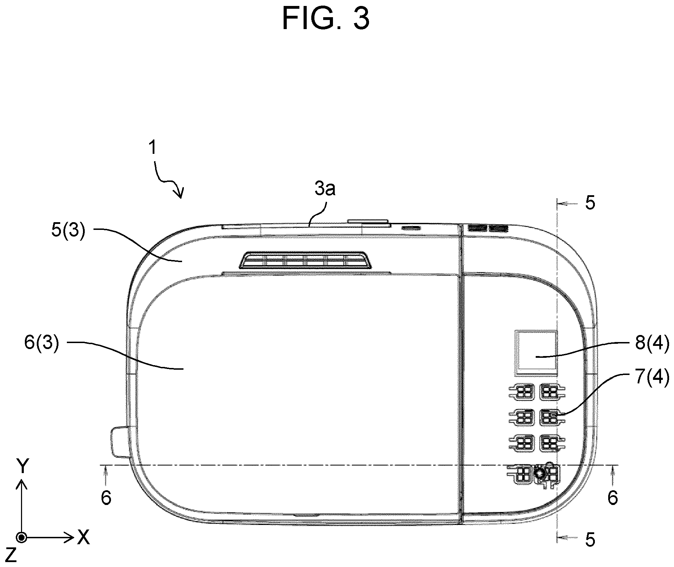

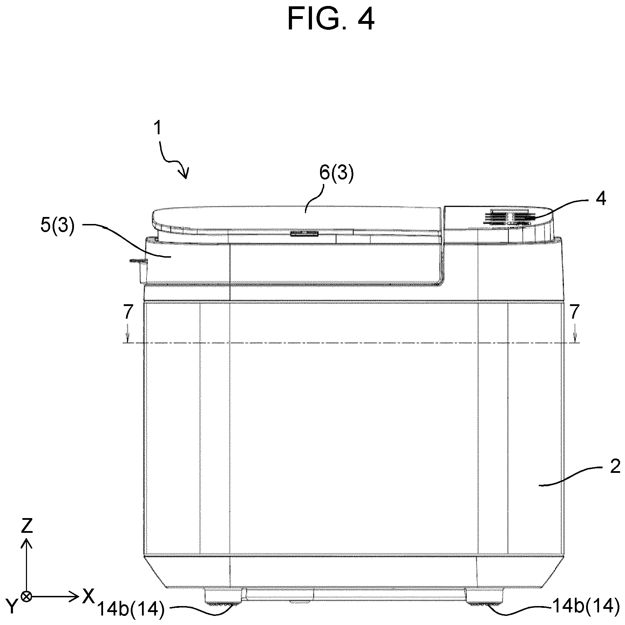

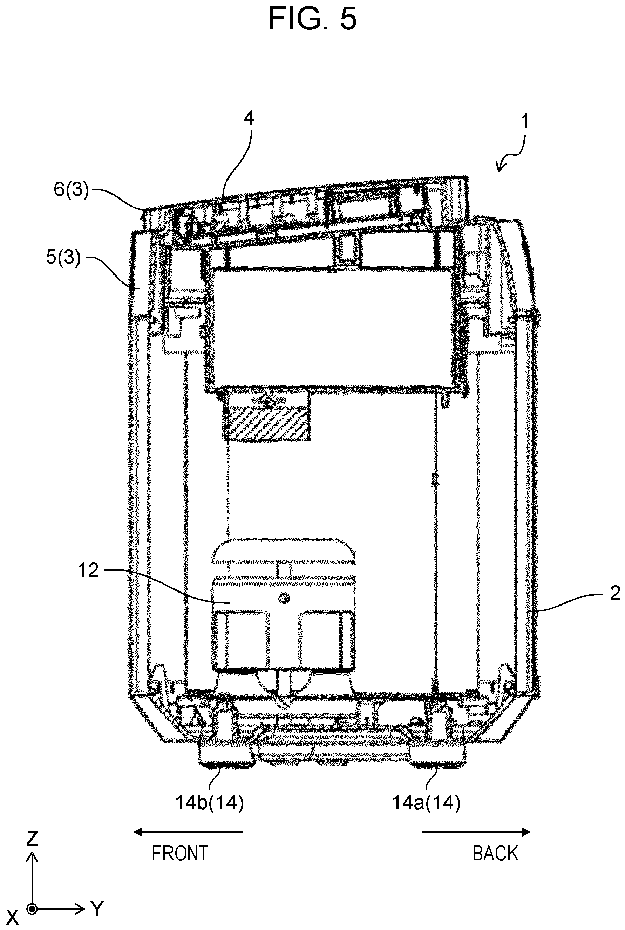

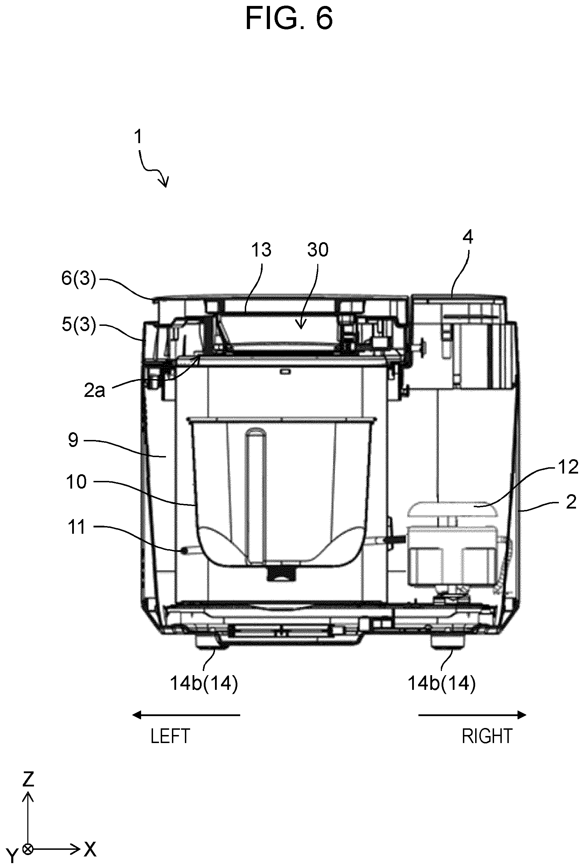

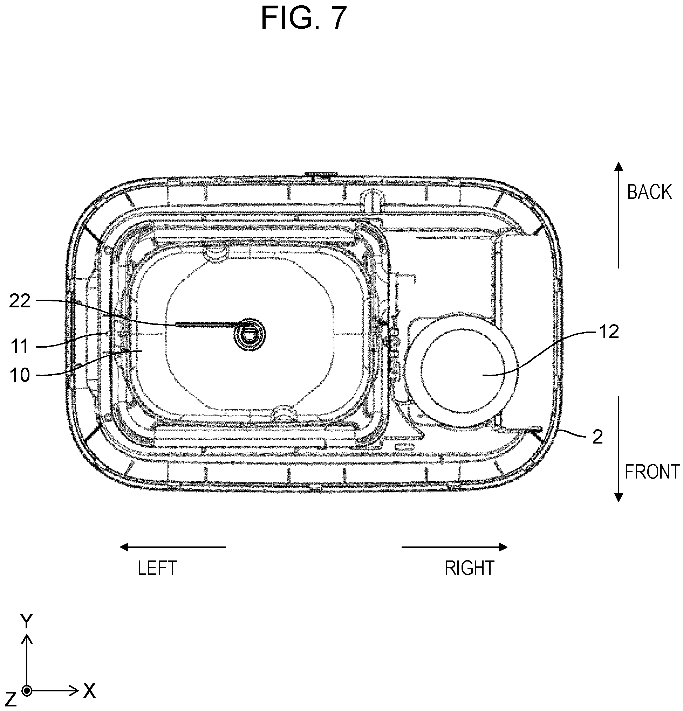

FIG. 1 is a perspective view of bread maker 1. FIG. 2 is a perspective view of bread maker 1 in a state outer lid 6 is open. FIG. 3 is a plan view of bread maker 1. FIG. 4 is a front view of bread maker 1. FIG. 5 is a longitudinal sectional view taken along line 5-5 in FIG. 3. FIG. 6 is a longitudinal sectional view taken along line 6-6 in FIG. 3. FIG. 7 is a transverse sectional view taken along line 7-7 in FIG. 4.

In the drawings, X-axis, Y-axis, and Z-axis indicate a horizontal direction (left-right direction), a depth direction (front-back direction), and a height direction (perpendicular direction) of bread maker 1, respectively. A front surface and back surface of bread maker 1 are indicated as a front side and a back side in some of the drawings. In other words, the front side of bread maker 1 is a negative direction of the Y-axis, and the back side of bread maker 1 is a positive direction of the Y-axis.

Left and right of bread maker 1 seen from the front are indicated as left and right, respectively, in some of the drawings. In other words, a right side of bread maker 1 is a positive direction of the X-axis, and a left side of bread maker 1 is a negative direction of the X-axis.

In the present disclosure, a structure of bread maker 1 is described using terms "plan view", "front view", and "side view". The plan view is a view of bread maker 1 seen from the top, i.e., a view of bread maker 1 seen toward a negative direction of the Z-axis along the Z-axis. The front view is a view of bread maker 1 seen from the front, i.e., a view of bread maker 1 seen toward the positive direction of the Y-axis along the Y-axis. The side view is a view of bread maker 1 seen from the side, i.e., a view of bread maker along the X-axis.

As illustrated in FIG. 1 and FIG. 2, bread maker 1 includes main body 2, lid 3, and operation part 4.

### [Main body]

As illustrated in FIG. 5 to FIG. 7, main body 2 has a bottomed cylindrical shape. Main body opening 2a is created in a top part of main body 2. Lid 3 is attached to main body 2 so as to openably cover main body opening 2a. Heating chamber 9 is provided inside main body 2. In other words, main body opening 2a is communicated with heating chamber 9.

In the first exemplary embodiment, main body 2 typically has a metal outer frame to offer a profound and high-grade appearance to a user.

Kneading container 10 is detachably disposed inside heating chamber 9. Kneading container 10 has a bottomed-cylindrical shape. Kneading chamber 10 kneads and heats ingredients. The ingredients are, for example, bread dough, flour and glutinous rice. Main body 2 has four rubber legs 14 that support bread maker 1. Rubber legs 14 include two back rubber legs 14a disposed on a back bottom and two front rubber legs 14b disposed on a front bottom of main body 2.

Kneading paddle 22 for kneading the ingredients is detachably mounted at a bottom center of kneading container 10. In bread maker 1, motor 12 drives a belt via a small pulley, and thereby driving kneading paddle 22. Motor 12 is disposed in a front half area inside main body 2 (see FIG. 5). To cool motor 12, a cooling fan may be disposed near motor 12.

Heater 11 for heating kneading container 10 is disposed inside heating chamber 9 and outside kneading container 10. Heater 11 is disposed so as to surround a bottom part of kneading container 10 with a space between heater 11 and the bottom part of kneading container 10. Heater 11 is an induction heating coil, a planer heater, a seeds heater, a positive temperature coefficient (PTC) heater, or the like. A temperature sensor for detecting a temperature inside heating chamber 9 may be disposed in heating chamber 9.

### [Lid]

As illustrated in FIG. 3, hinge 3a is disposed on a top rear part of main body 2 to pivotally support lid 3. In other words, lid 3 is attached to main body 2, and is rotatable about a rotating axis of hinge 3a. Lid 3 can be held in an open state by opening lid 3 to the maximum angle within a rotatable range.

As described above, the positive direction of the Y-axis is the back side of bread maker 1 (main body 2) in the drawings, and the negative direction of the Y-axis is the front side of bread maker 1 (main body 2). In other words, a side of bread maker 1 where hinge 3a is disposed is the back side of bread maker 1. A side of bread maker 1 opposite to the back side of main body 2 is the front side of bread maker 1. The side of bread maker 1 where hinge 3a is disposed is also referred to as a hinge side of bread maker 1.

As illustrated in FIG. 2, lid 3 includes lid body 5 and outer lid 6. Sub-ingredient container 20 and sub-ingredient container 21 are mounted on lid body 5. Sub-ingredient container 20 is disposed in a back half area of lid 3. Sub-ingredient container 21 is disposed in front of sub-ingredient container 20 in close proximity to sub-ingredient container 20.

Sub-ingredient container 20 is a detachable container that accommodates a sub-ingredient with relatively large volume, such as raisin and nut. Sub-ingredient container 21 is a container smaller than sub-ingredient container 20, and accommodates a sub-ingredient with relatively small volume, such as yeast and spice. Sub-ingredients accommodated in sub-ingredient containers 20 and 21 are added to kneading container 10 during cooking.

Sub-ingredient container 20 is larger in size and weight compared with sub-ingredient container 21. In the first exemplary embodiment, sub-ingredient container 20 can accommodate up to about 150 g of sub-ingredient, and sub-ingredient container 21 can accommodate up to about 5 g of sub-ingredient. The weights of sub-ingredients that can be accommodated are given as an example. The weights are acceptable as long as they are within a predetermined range.

As illustrated in FIG. 2 and FIG. 6, mounting holes into which sub-ingredient containers 20 and 21 can be inserted are provided in lid body 5. Sub-ingredient containers 20 and 21 are mounted to lid body 5 by being inserted into the mounting holes, and are disposed above kneading container 10. Outer lid 6 is attached to lid body 5 such that container opening 30 of sub-ingredient container 20 and container opening 31 of sub-ingredient container 21 can be opened and closed.

Lid body 5 includes a device configured to control addition of sub-ingredient accommodated in container opening 30. For example, this device is a solenoid plunger. Outer lid 6 includes upper lid 13 corresponding to a shape of container opening 30 of sub-ingredient container 20. When outer lid 6 is closed, container opening 30 is covered with upper lid 13.

### [Operation part]

As illustrated in FIG. 1 to FIG. 4, operation part 4 is provided at a top part of main body 2 next to lid 3. Operation part 4 includes selector 7 and display 8. For example, selector 7 includes an operation button for selecting a specific cooking course from a plurality of cooking courses, an operation button for starting and stopping each operation, and an operation button for setting a timer. Display 8 is, for example, a liquid crystal display that displays information such as a selected cooking course, time, and processes.

To ensure user-friendliness, selector 7 is disposed in the front half area of a top surface of lid body 5, and display 8 is disposed at the back of selector 7. The position of selector 7 and the position of display 8 may be reversed. However, since display 8 is generally heavier than selector 7 including the operation buttons, display 8 is disposed at the back of selector 7.

Bread maker 1 includes a controller that is not illustrated. The controller controls each component of bread maker 1. The controller includes a storage medium such as a semiconductor memory in which a program for functioning the components is stored, and a processing circuit such as a central processing unit (CPU). The controller causes the processing circuit to read the program from the storage medium and execute the program to function each component.

### [Shape of bread maker]

In general, shapes of bread makers are roughly divided into two types: vertical and horizontal types. A vertical bread maker has a short horizontal width and a long depth. Therefore, the vertical bread maker can be placed in a narrow place with sufficient space in a depth direction.

The vertical bread maker is long and narrow when viewed from the top. Therefore, in the vertical bread maker, the motor is arranged in front of the kneading container disposed directly underneath the lid. Sub-ingredient container 20 and sub-ingredient container 21 are often arranged side by side at the top center of the lid.

Since the motor is arranged in the front half area inside the main body away from the hinge and the back rubber legs, the vertical bread makers can be retained in a relatively stable state when the lid is open.

The horizontal bread maker has a long horizontal width and a short depth. Therefore, a space is available in front of the bread maker for the user to freely use when the horizontal bread maker is placed on a table.

In the horizontal bread maker, the lid and the operation part are disposed side by side. The motor is arranged side by side with the kneading container that is directly underneath the lid. Sub-ingredient container 20 and sub-ingredient container 21 are often longitudinally arranged on the top part of the lid.

Since the horizontal bread maker is short in the depth direction, it is difficult to arrange the motor away from the hinge and the back rubber legs in the horizontal bread maker. Therefore, compared with the vertical bread maker, the horizontal bread maker tends to be unstable when the lid is open.

### [Motor arrangement]

As illustrated in FIG. 5 and FIG. 7, motor 12 is arranged in the front half area inside the main body 2. As illustrated in FIG. 6, motor 12 is arranged on the right side inside main body 2. Accordingly, motor 12 is disposed on the bottom surface in the right front inside main body 2.

### [How to identify gravity center position]

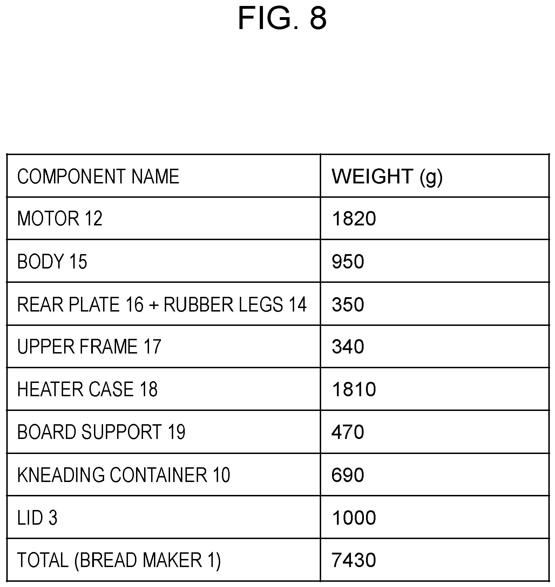

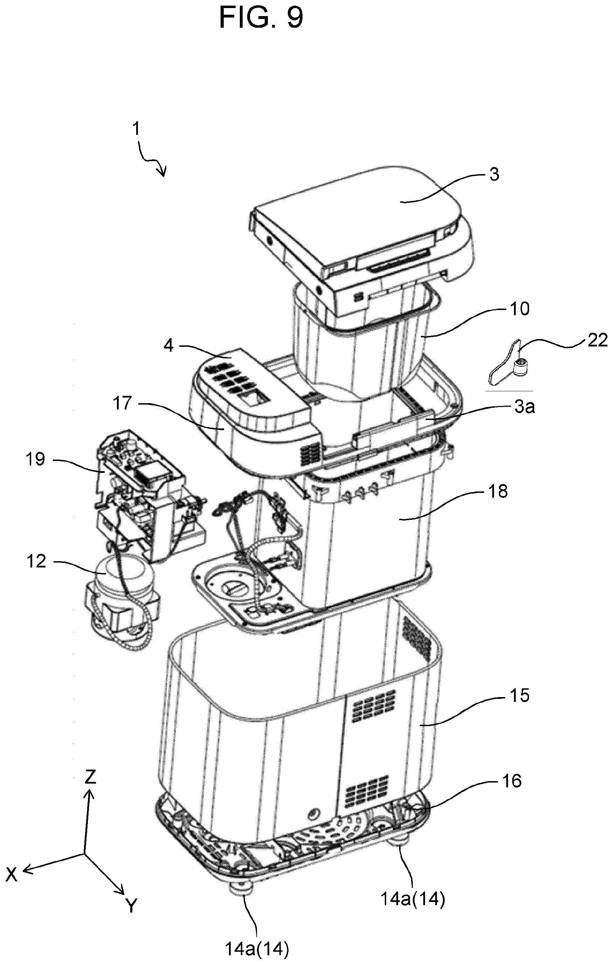

How to measure a gravity center position of bread maker 1 will be described with referent to FIG. 8 and FIG. 9.

To identify the gravity center position as described above, a method used in the exemplary embodiment will be described. FIG. 8 lists name and weight of each major component of bread maker 1. FIG. 9 is an exploded perspective view of bread maker 1. Major components of bread maker 1 will be described with reference to FIG. 8 and FIG. 9.

As listed in FIG. 8, motor 12 weighs about 1820 g. Body 15 corresponds to the outer frame of main body 2, and its weight is about 950 g. In the first exemplary embodiment, body 15 is made of metal. However, body 15 may be made of other materials such as resin instead of metal.

Rear plate 16 supports the main body. Weight of rear plate 16 including above-mentioned rubber legs 14 is about 350 g. Upper frame 17 includes a frame of lid 3 and operation part 4. Upper frame 17 weighs about 340 g. Kneading container 10 is disposed inside heater case 18. Heater case 18 weighs about 1810 g.

In the measurements, the weight of heater case 18 includes a lead wire attached to heater case 18. Board support 19 includes a control board for controlling operation part 4 and a frame for supporting the control board. Board support 19 weighs about 470 g.

As described above, kneading container 10 weighs about 690 g. Lid 3 including lid body 5, outer lid 6, sub-ingredient container 20, and sub-ingredient container 21 weighs about 1000 g. In other words, the weight of lid 3 accounts for roughly 13.5% of the total (7430 g) of bread maker 1.

The weights of the above components are examples, and weights of the components are acceptable as long as they are within predetermined ranges including the above values.

After identifying the weights of the major components, as described above, an approximate gravity center position of bread maker 1 is calculated. An example of calculating the gravity center position of bread maker 1 when lid 3 is open will be described below.

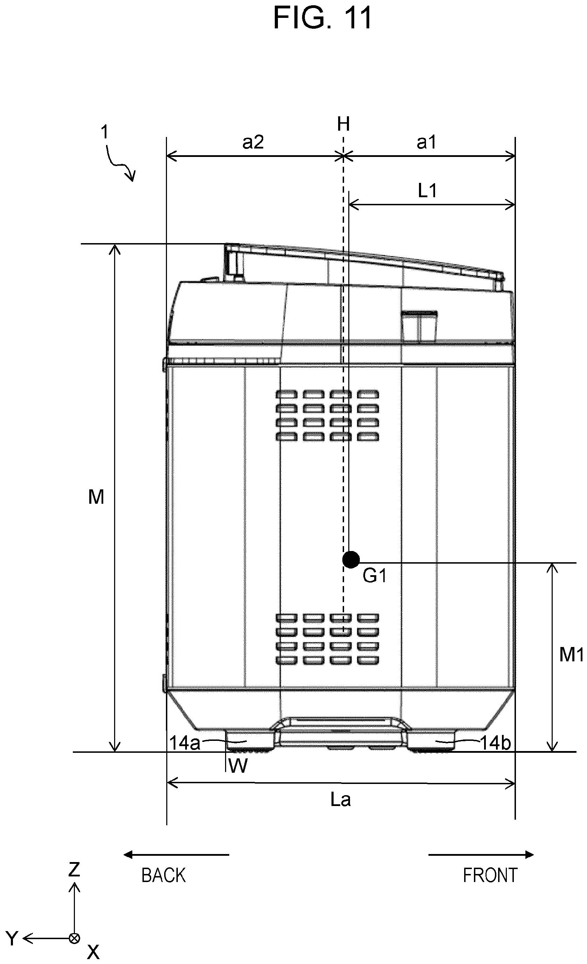

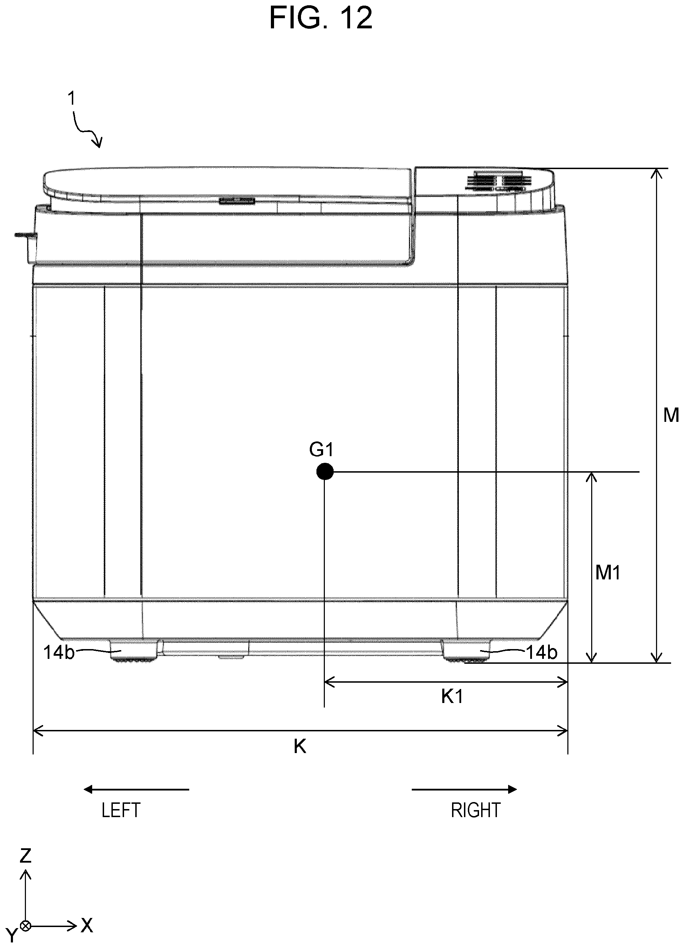

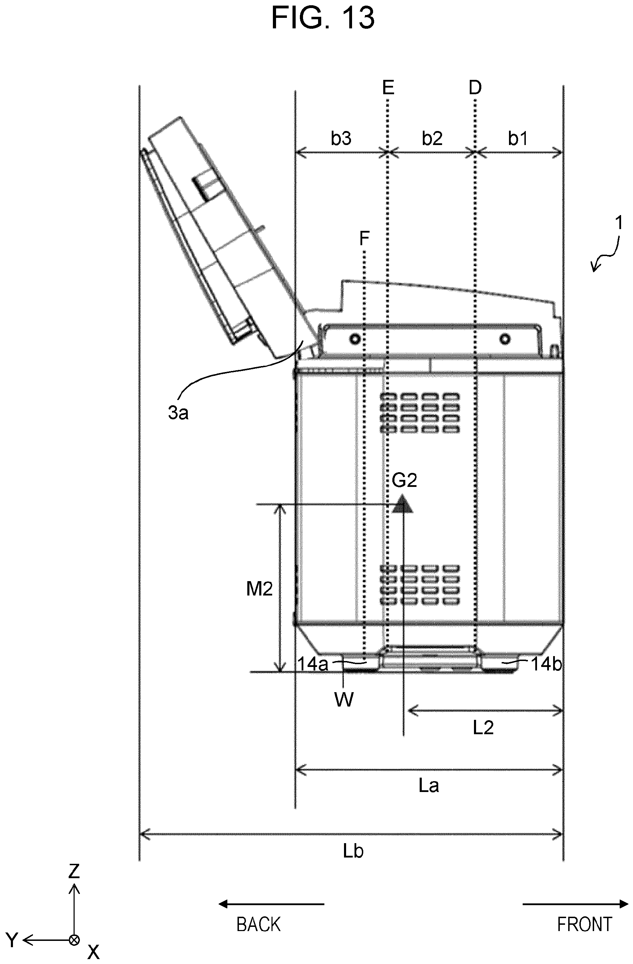

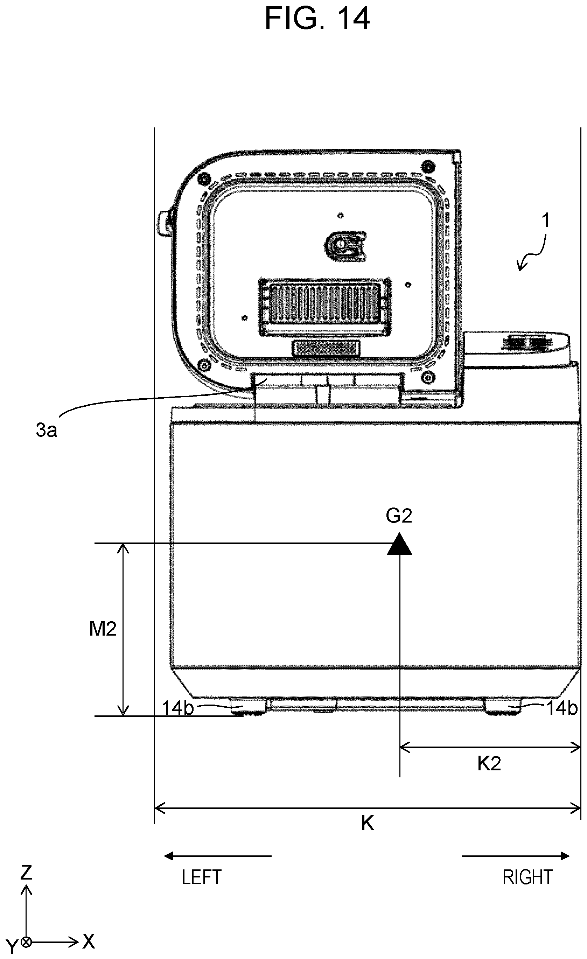

FIG. 11 and FIG. 12 are a side view and a front view of bread maker 1, respectively. FIG. 13 and FIG. 14 are a side view and a front view of bread maker 1, respectively.

In FIG. 13, the gravity acts to overturn bread maker 1 when lid 3 is rotated counterclockwise to rotate bread maker 1 counterclockwise relative to rotating center W. Rotating center W is a straight line along the X-axis passing back ends of back rubber legs 14a.

First, a distance between rotating center W and each of the components is calculated. Then, each calculated distance is multiplied by weight of corresponding component to obtain a rotational moment of each component. Here, the rotational moment received by each of the components other than lid 3 is calculated as a positive value, and the rotational moment received by lid 3 in the open state is calculated as a negative value. From the rotational moments calculated, the approximate gravity center position can be calculated.

### [Gravity center position in plan view]

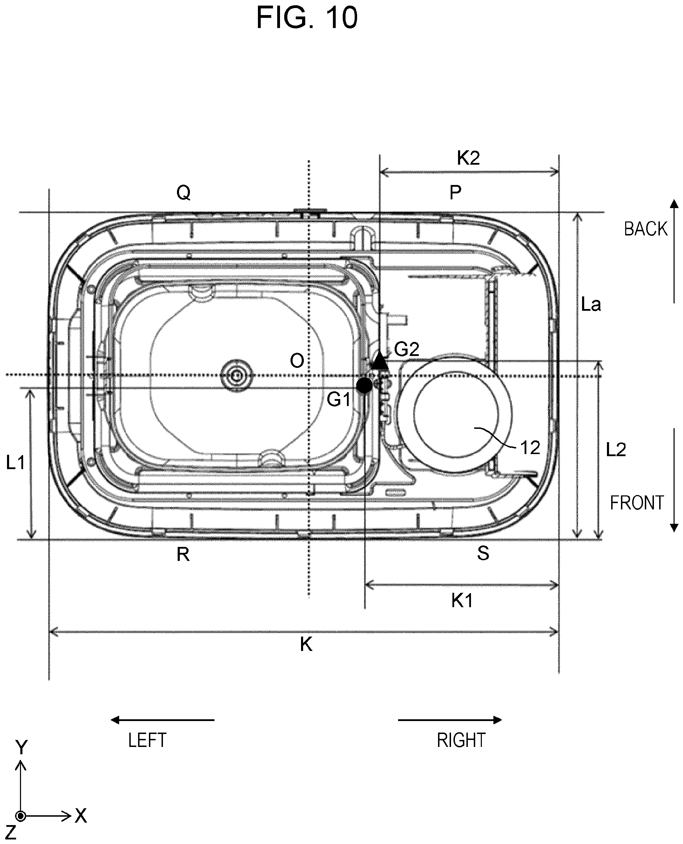

Next, the gravity center position of bread maker 1 is described with reference to FIG. 10 to FIG. 14. In the first exemplary embodiment, a gravity center of bread maker 1 when lid 3 is closed is defined as gravity center G1, and the gravity center of bread maker 1 when lid 3 is open is defined as gravity center G2.

FIG. 10 illustrates an XY coordinate system in a transverse sectional view in FIG. 7. As illustrated in FIG. 10, in a plan view of main body 2, this XY coordinate system is a two-dimensional orthogonal coordinate system on an XY plane including X and Y axes and center point O of main body 2 as an origin. The X-axis is a horizontal axis passing the origin in a direction of the rotating axis of hinge 3a, and the Y-axis is a vertical axis passing the origin and is perpendicular to the X-axis.

As illustrated in FIG. 10, the XY coordinate system includes first quadrant P, second quadrant Q, third quadrant R, and fourth quadrant S. First quadrant P is an area in which X coordinate is a positive value and Y coordinate is a positive value. Second quadrant Q is an area in which X coordinate is a negative value and Y coordinate is a positive value. Third quadrant R is an area in which X coordinate is a negative value and Y coordinate is a negative value. Fourth quadrant S is an area in which X coordinate is a positive value and Y coordinate is a negative value.

Now, dimensions of bread maker 1 in the first exemplary embodiment will be described. Horizontal width K of bread maker 1 is 396 mm. Horizontal width K is a length of a longer side of bread maker 1, and is a length of bread maker 1 along the X-axis. Depth La of bread maker 1 is 251 mm. Depth La is a length of a shorter side of bread maker 1, and is a length along the Y-axis. Height M of bread maker 1 is 371 mm. Height M is a length of bread maker 1 along the Z-axis when lid 3 is closed.

As described above, the gravity acts on lid 3 in the open state to overturn bread maker 1 by rotating bread maker 1 relative to rotating center W. Accordingly, to prevent overturning of bread maker 1, gravity center G2 is preferably located in a portion of main body 2 on the side opposite to hinge 3a with respect to center point O.

As illustrated in FIG. 10, hinge 3a is mainly arranged in second quadrant Q. The center of motor 12 is arranged in fourth quadrant S. By arranging motor 12 that is the heaviest component of bread maker 1 in the fourth quadrant, overturning of bread maker 1 can be suppressed.

In FIG. 11 and FIG. 12, gravity center G1 is located at a position where distance K1 is 171 mm and distance L1 is 122 mm.

As illustrated in FIG. 12, distance K1 is a distance from a right end of bread maker 1 to gravity center G1 along the X-axis in the front view. As illustrated in FIG. 11, distance L1 is a distance from a front end of bread maker 1 to gravity center G1 along the Y-axis in the side view.

In other words, gravity center G1 is located at a position 27 mm in the positive direction of X-axis from center point O and 3.5 mm in the negative direction of Y-axis from center point O. Accordingly, gravity center G1 is located in fourth quadrant S as illustrated in FIG. 10.

In FIG. 13 and FIG. 14, gravity center G2 is located in a position where distance K2 is 169 mm and distance L2 is 137 m. As illustrated in FIG. 14, distance K2 is a distance along the X-axis from the right end to gravity center G2 of bread maker 1 in the front view. As illustrated in FIG. 13, distance L2 is a distance along the Y-axis from the front end to gravity center G 2 of bread maker 1 in the side view.

More specifically, gravity center G2 is a position 29 mm in the positive direction of the X-axis from center point O and 11.5 mm in the positive direction of the Y-axis from center point 0. Accordingly, as illustrated in FIG. 10, gravity center G2 is located in first quadrant P.

These results show that the gravity center position shifts in the positive direction of the Y-axis, i.e., the back side of main body 2, when lid 3 is opened. The possibility of overturning of bread maker 1 increases as the position of gravity center G2 is closer to the back side of main body 2 with lid 3 in the open state.

### [Gravity center position when lid is closed]

As described above, gravity center G1 is located at a position where distance K1 is 171 mm and distance L1 is 122 mm. Gravity center G1 is located at a position where height M1 is 148 mm. As illustrated in FIG. 11 and FIG. 12, height M1 is a distance from a ground contact surface of rubber legs 14 to gravity center G1 along the Z-axis.

In FIG. 11, dotted line H is a straight line in a direction of the Z-axis that halves depth La of main body 2 to 125.5 mm each.

As illustrated in FIG. 11, two areas of bread maker 1 obtained by dividing bread maker 1 into two equal parts in the depth direction are area a1 that is a front half and area a2 that is a back half. Distance L1 is 122 mm, and therefore gravity center G1 is located in area a1. Accordingly, bread maker 1 is unlikely to overturn.

### [Gravity center position when lid is open]

As described above, gravity center G2 is located at the position where distance K2 is 169 mm and distance L2 is 137 mm. Gravity center G2 is located at the position where height M2 is 166 mm. As illustrated in FIG. 13 and FIG. 14, height M2 is a distance from the ground contact surface of rubber legs 14 to gravity center G2 along the Z-axis.

In FIG. 13, depth Lb is 350 mm. Depth Lb is a length of bread maker 1, along the Y-axis, including lid 3 in the open state. Dotted line F is a straight line along the Z-axis that halves depth Lb to 175 mm each. Since distance L2 is 137 mm, gravity center G2 is located in front of dotted line F.

In other words, gravity center G2 is located in the front half of bread maker 1 with lid 3 in the open state. Accordingly, bread maker 1 is unlikely to overturn even when lid 3 is open.

In FIG. 13, dotted line D and dotted line E are two straight lines in the direction of the Z-axis and divide depth La of main body 2 into three equal parts of about 84 mm each.

As illustrated in FIG. 13, in three areas of main body 2 that are three equal parts in the depth direction, front area b1 is from the front end of main body 2 to 1/3 of depth La. Back area b3 is from the back end of main body 2 to 1/3 of depth La. Center area b2 is between front area b1 and back area b3.

Since distance L2 is 137 mm, gravity G2 is located in center area b2. Accordingly, bread maker 1 is unlikely to overturn even when lid 3 is open.

As described above, height M1 of gravity center G1 is 148 mm and height M2 of gravity center G2 is 166 mm. Accordingly, height M2 of gravity center G2 is higher than height M1 of gravity center G1. This shows that the gravity center shifts to a higher position when lid 3 is opened, and bread maker 1 tends to become unstable.

To avoid unstable condition of bread maker 1, it is effective to examine arrangement and materials of components in order to lower the gravity center position with lid 3 in the open state.

Distances given above are examples and the present disclosure is not limited to these distances.

### [Advantage of first exemplary embodiment]

Bread maker 1 in the first exemplary embodiment is expected to have the following advantage.

Bread maker 1 includes main body 2, lid 3, kneading container 10, kneading paddle 22, motor 12, and hinge 3a.

Main body 2 has heating chamber 9 provided inside main body 2 and main body opening 2a communicated with heating chamber 9. Lid 3 is mounted on main body 2 to openably cover main body opening 2a, and can be held in the open state and closed state.

Kneading container 10 is disposed in heating chamber 9 to knead and heat ingredients. Kneading paddle 22 kneads the ingredients in kneading container 10. Motor 12 drives kneading paddle 22. Hinge 3a pivotally supports lid 3 onto main body 2.

In bread maker 1, when the hinge side of bread maker 1 and the side of bread maker 1 opposite to the hinge side are defined as the back side and front side of bread maker 1, respectively, motor 12 is disposed in the front half area inside main body 2. Hinge 3a is disposed on the top rear part of main body 2. The hinge side of bread maker 1 is the side where hinge 3a is disposed in bread maker 1.

In the side view of main body 2, gravity center G2 of bread maker 1 with lid 3 in the open state is located in front with respect to the center of depth Lb of bread maker 1 including lid 3 in the open state. Accordingly, this structure can reduce a tendency of bread maker 1 to overturn.

Bread maker 1 has three areas obtained by dividing main body 2 into three equal parts in the depth direction in the side view. Gravity center G2 of bread maker 1 when lid 3 is open is located in center area b2 in these three areas. This structure can reduce the tendency of bread maker 1 to overturn even when lid 3 is open.

In bread maker 1, gravity center G1 of bread maker 1 when lid 3 is closed is located in front half area a1 of the main body. This structure can reduce unstability of bread maker 1.

In bread maker 1, gravity center G2 of bread maker 1 when lid 3 is open is located in front half area a1 of main body 2 in the side view. This structure can reduce the tendency of bread maker to overturn even when lid 3 is open.

In bread maker 1, lid 3 includes sub-ingredient container 20. Sub-ingredient container 20 is disposed in the back half area of lid 3 in the closed state. This structure can reduce the tendency of bread maker 1 to overturn even with lid 3 in the open state.

Gravity center G2 of bread maker 1 when lid 3 is open is preferably located in the fourth quadrant in the above two-dimensional orthogonal coordinate system (XY coordinate system). This structure can reduce the tendency of bread maker 1 to overturn even when lid 3 is open.

Bread maker 1 is the horizontal bread maker in which the horizontal width of main body 2 is longer than the depth of main body 2. The vertical bread maker is a bread maker in which the horizontal width of main body 2 is shorter than the depth of main body 2. In other words, the horizontal bread maker has depth La, a shorter side, of main body 2 shorter than that of the vertical bread maker, and therefore the gravity center tends to shift to the back part when lid 3 is open.

By considering weights and arrangement of the components, such as motor 12, the gravity center can be located in the front half area of main body 2 even in the horizontal bread maker. As a result, tendency of bread maker 1 to overturn can be reduced.

### (Second exemplary embodiment)

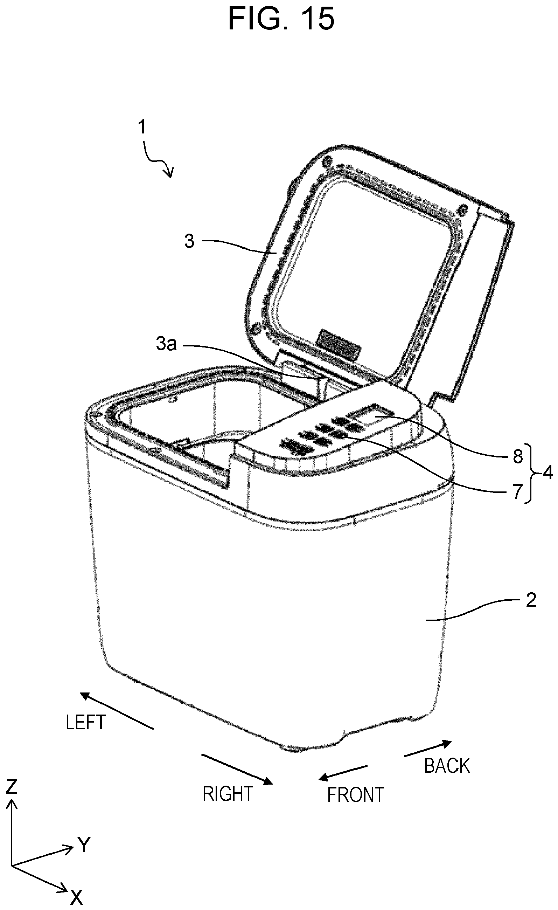

Bread maker 1 in accordance with a second exemplary embodiment of the present disclosure will be described with reference to FIG. 15 to FIG. 17.

### [Overall structure]

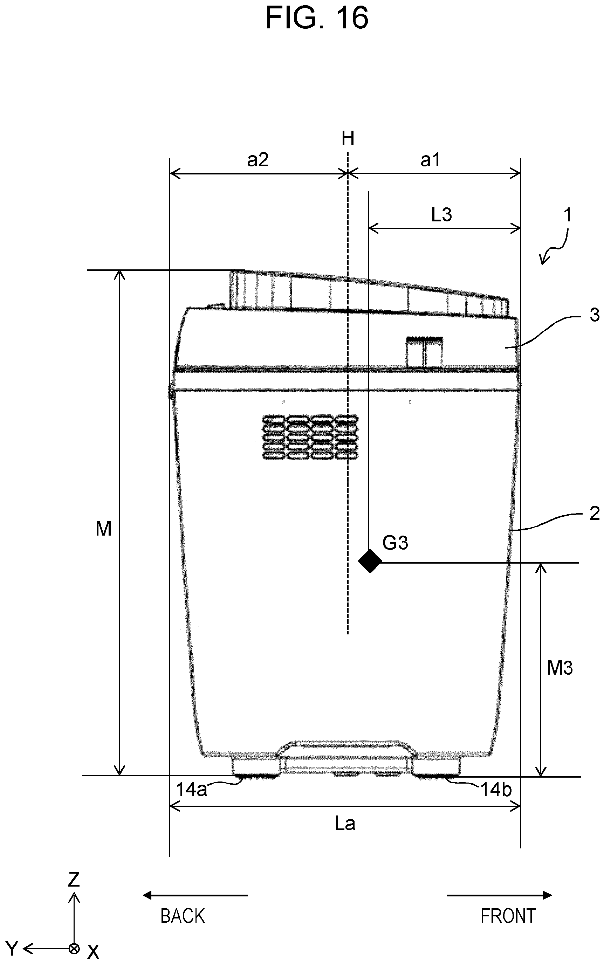

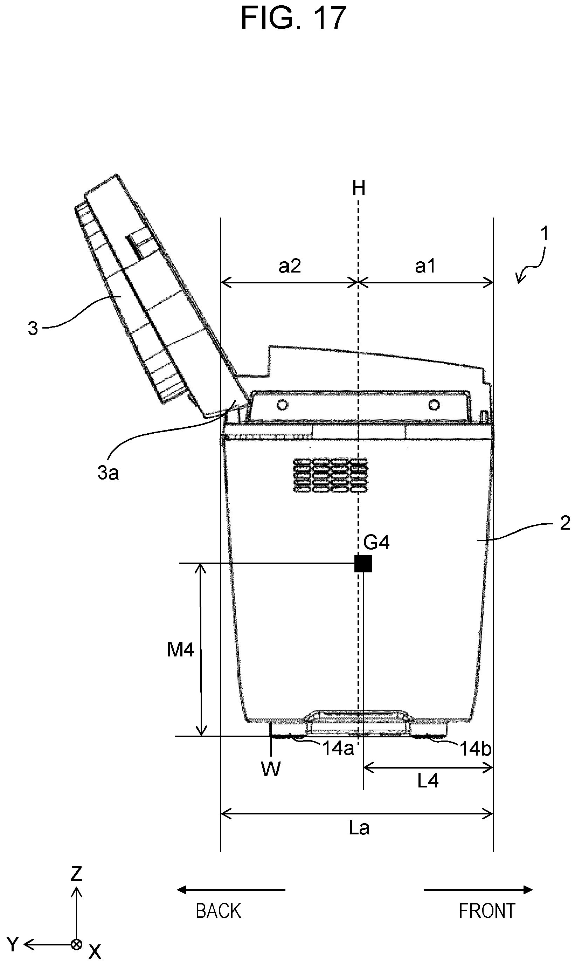

FIG. 15 is a perspective view of bread maker 1 in the second exemplary embodiment. FIG. 16 is a side view of bread maker 1 indicating a gravity center position of bread maker 1 when lid 3 is closed in the second exemplary embodiment. FIG. 17 is a side view of bread maker 1 indicating the gravity center position of bread maker 1 when lid 3 is open in the second exemplary embodiment.

### [Main body]

Main body 2 is basically configured the same as the first exemplary embodiment. However, main body 2 in the second exemplary embodiment is made light by adopting a resin outer frame. Main body 2 weighs about 810 g.

### [Lid]

Lid 3 in the second exemplary embodiment has the resin outer frame, and is not equipped with sub-ingredient container 20 and sub-ingredient container 21 in the first exemplary embodiment, in order to reduce weight. Lid 3 weighs about 500 g.

In the second exemplary embodiment, a total weight of bread maker 1 is 6790 g, and lid 3 weighs 502 g. In other words, the weight of lid 3 accounts for about 7.4% of the total weight of bread maker 1. Based on these weights, a gravity center of bread maker 1 in the second exemplary embodiment is calculated. Weights of the components given are just examples, and the weights are acceptable as long as they are within predetermined ranges.

### [Gravity center position when lid is closed]

In the second exemplary embodiment, the gravity center of bread maker 1 when lid 3 is closed is defined as gravity center G3, and the gravity center of bread maker 1 when lid 3 is open is defined as gravity center G4.

In a side view of bread maker 1 in FIG. 16, gravity center G3 is located at a position where distance L3 is 113 mm and height M3 is 135 mm. Distance L3 is a distance from a front end of bread maker 1 to gravity center G3 in a direction of the Y-axis in the side view. Height M3 is a distance from a contact ground surface of rubber legs 14 to gravity center G3 in a direction of the Z-axis.

In FIG. 16, dotted line H is a straight line in the direction of the Z-axis and divides depth La of main body 2 into two equal parts of 125.5 mm each, similarly to FIG. 11. As illustrated in FIG. 16, two areas of bread maker 1 are two equal parts in the depth direction. These two areas are area a1 that is a front half area and area a2 that is a back half area. Since distance L3 is 113 mm, gravity center G3 is located in area a1.

### [Gravity center position when lid is open]

In a side view of bread maker 1 in FIG. 17, gravity center G4 is located at a position where distance L4 is 125 mm and height M4 is 142.5 mm. Distance L4 is from the front end of bread maker 1 to gravity center G4 in the direction of the Y-axis in the side view. Height M4 is from the ground contact surface of rubber legs 14 to gravity center G4 in the direction of the Z-axis.

In FIG. 17, dotted line H is a straight line in the direction of the Z-axis and divides depth La of main body 2 into two equal parts of 125.5 mm each, similarly to FIG. 16. As illustrated in FIG. 17, since distance L4 is 125 mm, gravity center G4 is located in area a1.

### [Gravity center position in plan view]

As described above, gravity center G3 and gravity center G4 are located in area a1. Still more, when an XY coordinate system same as that in FIG. 10 is applied to bread maker 1 in the second exemplary embodiment, motor 12 is arranged in fourth quadrant S, same as the first exemplary embodiment. Accordingly, gravity center G3 and gravity center G4 are located in fourth quadrant G4 in the XY coordinate system same as FIG. 10. Accordingly, bread maker 1 is unlikely to overturn.

The above distances given are just examples, and the distances are not limited to the above values.

### [Advantage of second exemplary embodiment]

Bread maker 1 in the second exemplary embodiment of the present disclosure has the following advantage.

Gravity center G4 is located at a position where L4 is 125 m. In other words, gravity center G4 is located in area a1 of main body 2. In the plan view of main body 2, gravity center G4 is located in fourth quadrant S in the XY coordinate system having first quadrant P to fourth quadrant S with a center point of main body 2 as the origin. This structure can reduce a tendency of bread maker 1 to overturn even with lid 3 in the open state.

### (Other exemplary embodiments)

Other exemplary embodiments will be described below.

Bread maker 1 in the first and second exemplary embodiments is a horizontal bread maker that has higher possibility to overturn than a vertical bread maker. However, the bread maker may have other shapes including the vertical type.

In the first and second exemplary embodiments, operation part 4 is arranged in a front half area on a top surface of lid 3. This structure allows to arrange operation part 4 further away from rotating center W, compared with a structure of arranging operation part 4 in a back half area on the top surface of lid 3, so that the gravity center can be arranged further on the front side when lid 3 is closed. Accordingly, a tendency of bread maker 1 to overturn can be reduced.

However, the arrangement of operation part 4 is not limited to this position. Operation part 4 may be arranged in the back half area on the top surface of lid 3.

In the first and second exemplary embodiments, selector 7 is arranged in front of display 8 on the top surface of lid 3. However, display 8 may be arranged in front of selector 7.

In general, display 8 is heavier than selector 7. Therefore, in a structure that display 8 is arranged in front of selector 7, display 8 can be arranged further away from rotating center W, compared with the structure in the first and second exemplary embodiments, so that the gravity center can be arranged further on the front side when lid 3 is in the closed state. Accordingly, the tendency of bread maker 1 to overturn when lid 3 is closed can be reduced.

In the first exemplary embodiment, body 15 of main body 2 is made of metal. In the second exemplary embodiment, body 15 of main body 2 is made of resin. Lid 3 may be made of a material same as or different from body 15. When body 15 is made of metal, the gravity center can be arranged in the front half area of bread maker 1, compared with when body 15 is made of resin. Accordingly, the tendency of bread maker 1 to overturn can be reduced.

In the second exemplary embodiment, lid 3 and body 15 are made of resin. However, metal body 15 allows to arrange the gravity center further on the front side of bread maker 1, compared with resin body 15.

In the first exemplary embodiment, the weight of lid 3 accounts for about 13.5% of the total weight of bread maker 1. In the second exemplary embodiment, the weight of lid 3 is about 7.4% of the total weight of bread maker 1. In other words, when the weight of lid 3 accounts for 7% or more of the total weight of bread maker 1, the gravity center of bread maker 1 with lid 3 in the open state is likely located in the back half area of bread maker 1. This makes bread maker 1 unstable.

Accordingly, the above exemplary embodiments can effectively reduce the tendency of bread maker to overturn when the weight of lid 3 accounts for 5% or more of the total weight of bread maker 1.

The present disclosure is applicable to cooking appliances that can hold the lid in the open state, such as a bread maker and a rice cooker.

## Claims

1. A bread maker comprising:
a main body including a heating chamber provided inside the main body and a main body opening communicated with the heating chamber;
a lid attached to the main body to openably cover the main body opening, the lid being retainable in an open state and a closed state;
a kneading container disposed in the heating chamber and configured to knead and heat an ingredient;
a kneading paddle configured to knead the ingredient in the kneading container;
a motor configured to drive the kneading paddle; and
a hinge configured to pivotally support the lid onto the main body, wherein
the bread maker includes a hinge side and a side opposite to the hinge side, the hinge side being a back side of the bread maker and the side opposite to the hinge side being a front side of the bread maker,
the motor is disposed in a front half area inside the main body,
the hinge is disposed in a top rear part of the main body, and
in a side view of the main body, a gravity center of the bread maker with the lid in the open state is located in front of a center of a depth of the bread maker including the lid in the open state.

2. The bread maker according to claim 1, wherein
in the side view, the gravity center of the bread maker when the lid is in the open state is located in a center area of three areas of the main body, the three areas being three equal parts in a depth direction.

3. The bread maker according to claim 1, wherein
in the side view, a gravity center of the bread maker when the lid is in the closed state is located in the front half area of the main body.

4. The bread maker according to claim 1, wherein
in the side view, the gravity center of the bread maker when the lid is in the open state is located in the front half area of the main body.

5. The bread maker according to claim 1, wherein
the lid has a sub-ingredient container, and
the sub-ingredient container is disposed in a back half area of the lid in the closed state.

6. The bread maker according to claim 1, wherein
when an orthogonal coordinate system of two dimensions is assumed in a plan view of the main body and the orthogonal coordinate system includes an origin that is a center point of the main body, a horizontal axis that passes the origin in a direction of a rotating axis of the hinge, and a vertical axis that passes the origin and is perpendicular to the horizontal axis, the gravity center of the bread maker when the lid is in the open state is located in a fourth quadrant in the orthogonal coordinate system.

7. The bread maker according to one of claims 1 to 6, wherein the bread maker is a horizontal bread maker whose horizontal width of the main body is longer than a depth of the main body.
